# EUROPEAN PATENT SPECIFICATION

(11) **EP 2 360 976 B1**
(45) Date of publication and mention of the grant of the patent: **30.10.2013**
(21) Application number: 10305149.6
(22) Date of filing: 15.02.2010
(51) Int. Cl.: H04W 52/02

(54) **A method for scheduling a mode for transmission, a base station and a user terminal therefor**
Verfahren zur Zeitplanung eines Modus zur Übertragung, Basisstation und Benutzerendgerät dafür
Procédé de programmation d'un mode de transmission, station de base et terminal utilisateur correspondant

(43) Date of publication of application: 24.08.2011
(73) Proprietor: Alcatel Lucent, 75007 Paris (FR)
(72) Inventor: Zeller, Dietrich, 71067 Sindelfingen (DE); Braun, Volker, 70176 Stuttgart (DE); Doll, Mark, 70469 Stuttgart (DE)
(74) Representative: Kleinbub, Oliver

(56) References cited:
- EP-A1- 2 154 921
- EP-A1- 2 339 882
- EP-A2- 2 173 135
- WO-A1-2004/075583
- WO-A1-2009/077893
- WO-A1-2009/140988
- WO-A2-2011/085238
- DE-A1-102005 051 291
- US-A1- 2010 008 276
- ERICSSON ET AL: "Extended cell DTX for enhanced energy-efficient network operation", 3GPP DRAFT; R1-095011{ENERGY EFFICIENCY}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389361, [retrieved on 2009-11-05]

## Description

### Field of the invention

The invention relates to a method for scheduling a mode for transmission between a base station and user terminals, and a base station and a user terminal adapted to perform said method.

### Background

In cellular communication networks using standards like e.g. Third Generation Partnership Long Term Evolution (3GPP LTE) standard, the reduction of energy consumption is a task of growing interest in view of growing costs for energy and the need to reduce the emission of CO₂.

The energy consumption of user terminals has been a topic for research and development for more than a decade which resulted in energy-efficient transmission and reception schemes for user terminals. However, regarding the overall energy consumption of a cellular communication network, the by far most important part of the energy consumption is on the base station site.

In the patent application WO 2009/140988 A1, methods, apparatuses, a system and a computer program product for reducing a power consumption in low load scenarios are disclosed. An apparatus can comprise transmitting means, receiving means and determining means for determining whether a signal quality of a broadcast channel of a wireless network is insufficient, wherein the transmitting means may transmit on a wireless access channel an activation information to a further apparatus if the determination is affirmative. The activation information can indicate that disabled transmitting means of the further apparatus should be re-enabled.

In the patent application WO 2004/075583 A1, a method and system for reduction of electrosmog in wireless local networks is disclosed. After a predefinable time interval without connecting signal, the base station changes from the normal transmitting-receiving mode into a sleep mode, in which sleep mode no beacon signals and/or other radio frequency signals are transmitted from the base station. If a mobile network unit requires a network connection, it transmits an alert signal, and, upon receiving the alert signal of the mobile network unit, the base station transmits beacon signals to the mobile network unit and changes over into the normal transmitting-receiving mode.

In the patent application publication US 2010/0008276 A1, an access point is disclosed that includes a control module that transitions the access point from a normal mode to a power save mode based on whether the client station communicates with the access point during the predetermined period of time.

In the patent application publication DE 10 2005 051 291 A1, a base station is disclosed which is inactive if it receives no radio signal from a mobile terminal. If an inactive base station receives a radio signal from a mobile terminal, it changes to an active mode.

In the patent application WO 2009/077893 A1, a method for generation of beacons by a base station is disclosed. The generation of the beacons is started with a switching on of the base station and is ended after the expiry of a wait time in the event that no station is connected to the base station, and the generation of the beacons is started by a receipt of a probe request from a station of the communications network and is ended after the expiry of a wait time in the event that no station is connected to the base station.

### Summary

The main task of the invention is the reduction of the energy consumption on the base station site.

The object of the invention is thus to propose a method for transmissions between a base station and user terminals with improved resource usage, i.e. with reduced energy consumption.

The basic idea of the invention is to reduce energy consumption of a communication network, as e.g. an LTE network, by temporarily switching off the power amplifier on the base station site.

According to the prior art, even when there are no active user terminals in the cell, downlink transmission of cell-specific reference signals (CRS), of primary and secondary synchronization signals (PSS and SSS), and of the broadcast channel (BCH) takes place.

According to the invention, a new transmission scheme is proposed, in which transmission of the broadcast channel (BCH) is avoided if no connected user terminals or user terminals in idle mode are in a cell, as in such cases, the transmission of broadcast channel information is not needed.

The object is thus achieved by a method according to claim 1.

The object is furthermore achieved by a base station according to claim 9.

The object is furthermore achieved by a user terminal according to claim 10.

The invention is described in the following within the framework of 3GPP LTE, however as the invention is not restricted to 3GPP LTE, but can in principle be applied in other networks that transmit broadcast channel information in downlink, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily the usage of subframe zero according to the prior art.
Fig. 4 schematically shows exemplarily the usage of subframe zero according to an embodiment of the invention.
Fig. 5 schematically shows an example for indication of the presence of a user terminal in a cell by means of a signalling message according to an embodiment of the invention.
Fig. 6 schematically shows an example for indication of the presence of a user terminal in a cell by means of a signalling message triggered by a base station according to an embodiment of the invention.

### Description of the embodiments

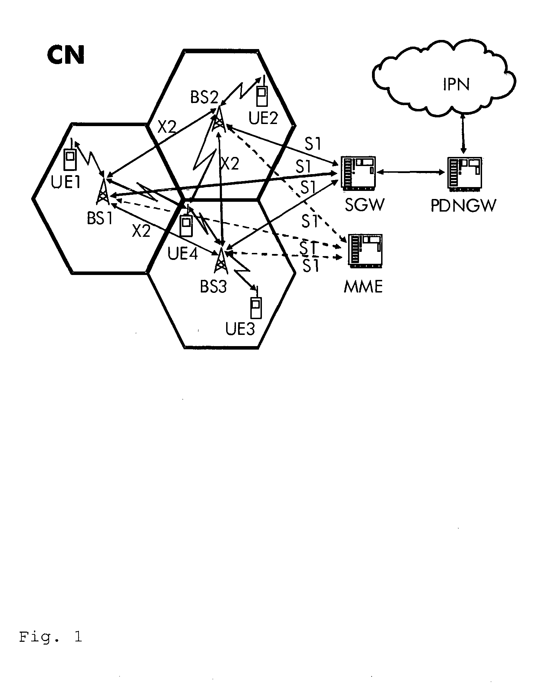

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

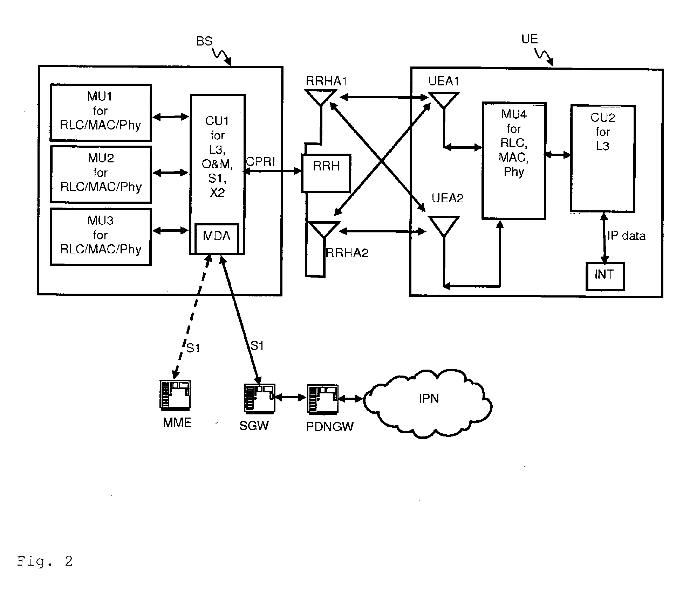

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the on the MAC layer (MAC = Media Access Control) which is responsible and Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

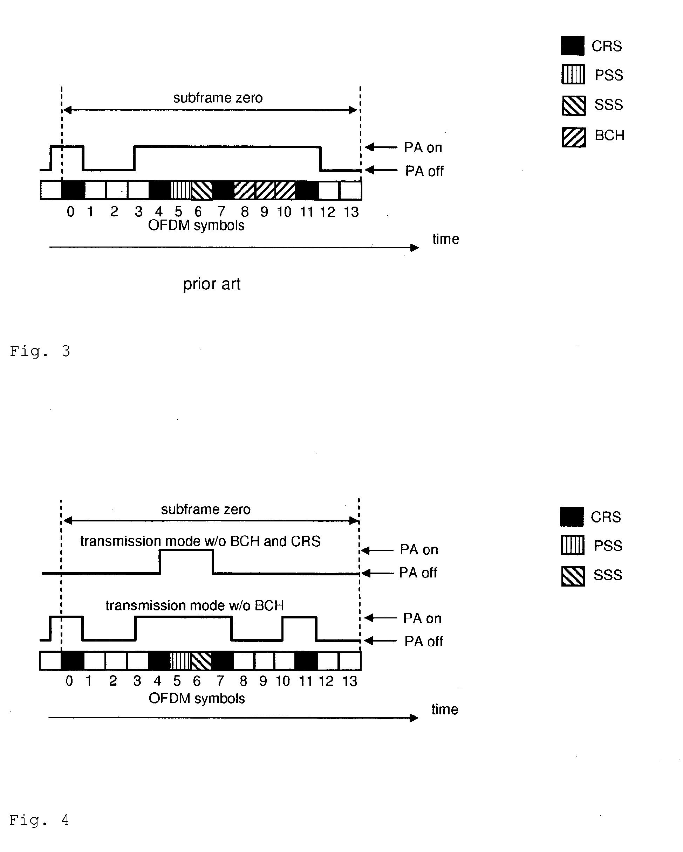

Fig. 3 schematically shows exemplarily the usage of subframe zero of a frame according to the prior art.

In LTE, each frame is subdivided into 10 subframes, and each subframe in turn comprises 14 OFDM symbols (OFDM = Orthogonal Frequency Division Multiplexing).

The 14 OFDM symbols that build subframe zero are depicted in fig. 3.

The cell-specific reference signals CRS are transmitted in every subframe, and can be used for channel estimation for coherent demodulation of downlink transmission, and for cell-search measurements, both for neighbour-cell measurements for handover and for measurements before initial access.

In the embodiment depicted in fig. 3, the OFDM symbols 0, 4, 7 and 11 are used for transmission of cell-specific reference signals CRS in subframe zero.

The primary synchronization signals PSS and the secondary synchronization signals SSS are transmitted in every frame in subframe 0 and 5, in which the OFDM symbols 5 and 6 are used for the primary synchronization signals PSS and the secondary synchronization signals SSS respectively. The primary synchronization signals PSS and the secondary synchronization signals SSS are used to assist the cell search.

The broadcast channel information BCH is transmitted in the first subframe of each frame in four consecutive frames. The broadcast channel information is transmitted to all user terminals in the cell and includes relevant system parameters to enable the user terminals to establish a signalling connection with the base station or the radio access network. In the WiMAX system, equivalent information is broadcasted within the frame control header (FCH), uplink and downlink maps and the uplink and downlink channel descriptor, (UCD and DCD), respectively.

In the embodiment depicted in fig. 3, the OFDM symbols 8, 9 and 10 are used for transmission of the broadcast channel information BCH.

The broadcast channel information BCH includes, among other parameters, signaling of the system frame number (SFN), which is required to enable sending paging messages to a user terminal.

In order to quantify the energy consumption of a power amplifier used in a base station for transmission, it is useful to analyze the so-called minimum power-amplifier transmission-time fraction, which is defined as the ratio between the time the base station is required to transmit signals, as e.g. cell-specific reference signals CRS, primary and secondary synchronization signals PSS and SSS, or broadcast channel information BCH, and the total time.

In fig. 3, the power profile of the power amplifier is depicted as a solid line just above the OFDM symbols. "PA on" in fig. 3 indicates, that the power amplifier is switched on, and "PA off" in fig. 3 indicates, that the power amplifier is switched off. The power amplifier needs to ramp up the power to the desired level somewhat before the transmission but can then be switched off fairly quickly. For calculations of the minimum power-amplifier transmission-time fraction it has been assumed that half an OFDM symbol must be added to each transmission to allow for the power amplifier to reach the desired power level from the power saving state. The addition of half an OFDM symbol is an example, and the time will depend on hardware characteristics.

The subframe zero according to the prior art as depicted in fig. 3 contains both cell-specific reference signals CRS, primary and secondary synchronization signals PSS and SSS, and broadcast channel information BCH. This structure will result in two transmissions being 1.5 and 8.5 OFDM symbols long, respectively, which can be seen by the upper solid line representing the power profile. Thus, the transmission structure results in a minimum power-amplifier transmission-time fraction of (10 OFDM symbols)/(14 OFDM symbols) ≈ 71%.

According to an embodiment of the invention, transmission of the broadcast channel (BCH) is avoided if no connected user terminals or user terminals in idle mode are in a cell, where a user terminal in idle mode shall be referred to a user terminal which has not established a higher layer signaling connection with the base station or the radio access network.

Fig. 4 schematically shows exemplarily the usage of subframe zero of a frame according to the embodiment of the invention.

The transmission scheme corresponds to the transmission scheme of the prior art as depicted in fig. 3, with the difference, that the transmission of the broadcast channel in OFDM symbols 8, 9 and 10 is omitted. In other words, in subframe zero, only cell-specific reference signals CRS and primary and secondary synchronization signals PSS and SSS are mapped on OFDM symbols.

As a consequence, the energy consumption of a power amplifier used in a base station for transmission applying the transmission scheme according to the embodiment of the invention is reduced compared to the energy consumption according to the prior art depicted in fig. 3. This reduction of the energy consumption can be seen when looking at the power profile of the power amplifier which is in a transmission mode without BCH transmission, which is depicted as a solid line just above the OFDM symbols in fig. 4.

This transmission structure will result in three transmissions being 1.5, 4.5, and 1.5 OFDM symbols long, respectively, which can be seen by the lower solid line representing the power profile. Thus, the transmission structure results in a minimum power-amplifier transmission-time fraction of (7.5 OFDM symbols)/(14 OFDM symbols) ≈ 54%, which is clearly below the 71% for the transmission scheme according to the prior art depicted in fig. 3.

In a preferred embodiment of the invention, not only the transmission of the broadcast channel (BCH), but also the transmission of the cell-specific reference signals CRS is avoided if no connected user terminals or user terminals in idle mode are in a cell.

In our example for subframe zero depicted in fig. 4, this would mean that additionally also in OFDM symbols 0, 4, 7 and 11, no transmission takes place.

As a consequence, the energy consumption of a power amplifier used in a base station for transmission applying the transmission scheme according to the preferred embodiment of the invention is even more reduced compared to the energy consumption according to the prior art depicted in fig. 3. This reduction of the energy consumption can be seen when looking at the power profile of the power amplifier which is in a transmission mode without BCH and CRS transmission, which is also depicted as a solid line in fig. 4.

This transmission structure according to the preferred embodiment will result in only one transmission being 2.5 OFDM symbols long, which can be seen by the upper solid line representing the power profile. Thus, the transmission structure according to the preferred embodiment results in a minimum power-amplifier transmission-time fraction of (2.5 OFDM symbols)/(14 OFDM symbols) ≈ 18%, which is clearly below the 71% for the transmission scheme according to the prior art depicted in fig. 3, and also below the 54% according to the embodiment of the invention without BCH transmission, but with CRS transmission.

As cell-specific reference signals CRS may be used e.g. by user terminals in neighbour cells for cell-search measurements for a possible handover, an alternative to perform such cell-search measurements must be available if no cell-specific reference signals CRS are transmitted any more.

As an alternative, e.g. the secondary synchronization signals SSS can be used to perform such cell-search measurements.

In the embodiments described above, the omittance of BCH transmission has been described for subframe zero only. However, each BCH transmission can be omitted according to further embodiments of the invention in an analogous manner e.g. in WiMAX systems.

As already mentioned above, an energy saving mode according to an embodiment of the invention without transmission of broadcast channel information can be realized in cells in which there are no connected user terminals or user terminals in idle mode. In the presence of at least one idle mode user terminal in the cell, the broadcast channel BCH shall be switched on.

Thus, there must be protocol procedures which allow a base station to switch between a transmission mode without transmission of broadcast channel information, and a transmission mode with transmission of broadcast channel information depending on the presence of at least one idle mode user terminal or connected user terminal in the cell.

In the following, two protocol procedures according to embodiments of the invention are described as examples for switching between said transmission modes with and without transmission of broadcast channel information.

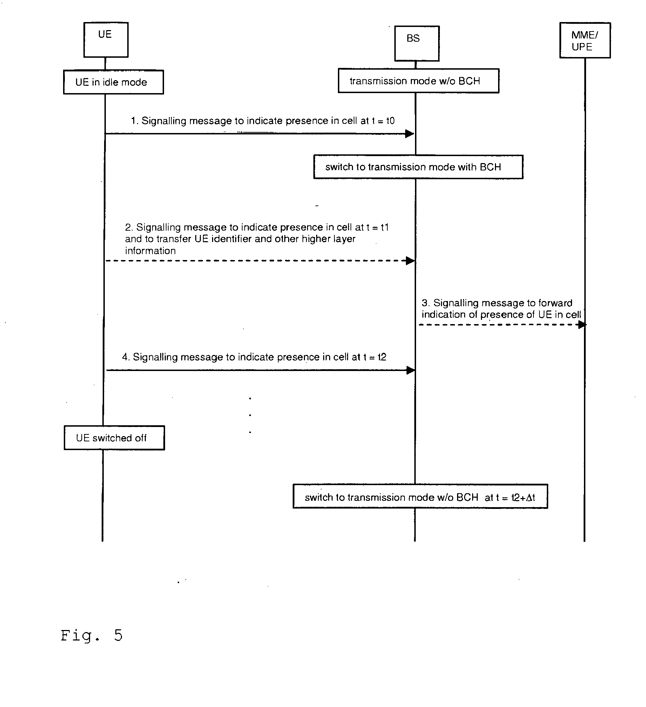

In fig. 5, a protocol procedure according to an embodiment of the invention for the exchange of messages between a user terminal UE and a base station BS in order to make the user terminal UE in idle mode known to the base station BS is depicted.

In the initial state at the beginning, the base station BS shall be in the transmission mode without transmission of broadcast channel information, and the user terminal UE shall just have entered the coverage of the cell that is served by the base station BS, and shall be in idle mode.

According to the embodiment of the invention, a user terminal in idle mode shall repeatedly send signalling messages in order to indicate its presence in the coverage of a cell. The time interval of the signalling messages shall preferably be in the range of minutes in order to have limited impact on battery life. Said signalling messages may e.g. be initial access messages, e.g. random access preambles on the random access channel in LTE or initial ranging codes on the ranging subchannel in WiMAX.

The sending of a RACH (RACH = random access channel) preamble by a user terminal in idle mode can be enabled by implicitly defining the RACH configuration for the transmission mode without transmission of broadcast channel information. E.g. the LTE-Advanced standard could define that physical random access channel (PRACH) configuration index 0 of the standard 3GPP TS 36.211 (3GPP = Third Generation Partnership Project) shall be applied for an uplink bandwidth corresponding to 6 physical resource blocks, or alternatively the PRACH configuration could be predefined as a function of the cell identifier for an uplink bandwidth corresponding to 6 physical resource blocks.

In an embodiment of the invention, the random access channel configuration is dependent on a cell identifier that is e.g. derived from primary or secondary synchronization signals received by the user terminals (UE). In order to mitigate interference between cells which are time synchronized and preferably in low-load conditions, the so-called PRACH configuration index, as described in the standard 3GPP TS 36.211 in paragraph 5.7, can then e.g. be chosen as modulo 3 of the cell identifier.As an alternative to using initial access messages, also some other physical layer signalling messages could be used, e.g. scheduling request messages or messages on a contention-based channel, in particular in the case of very small cells, where the uplink time advance may be predefined.

Thus, the user terminal UE in idle mode sends at time t=t0 a signalling message denoted with 1. to indicate its presence in the cell.

After reception of said signalling message, the base station BS switches to the transmission mode with transmission of broadcast channel information, as the user terminal UE in idle mode needs to know e.g. the system frame number in order to enable the receiving of paging messages.

After a predefined time interval, the user terminal UE in idle mode again sends at time t=t1 a signalling message denoted with 2. to indicate its presence in the cell. This signalling may be similar as with the message denoted with 1. Additionally, this signalling denoted with 2. may include higher layer signalling, e.g. RRC signalling, in order to inform the base station BS about an identifier of the user terminal UE and other parameters of the user equipment UE. For this purpose a new RRC signaling message or new RRC contents may be introduced or an existing RRC signaling message could be used.

Strictly speaking, the user terminal UE switches from idle mode to a connected mode when using RRC signaling. However, the RRC signalling connection could be setup on a temporary basis, merely to transmit the signaling message denoted with 2., and the user terminal may remain in idle mode so as not to occupy any user identifiers after completion of the signaling message denoted with 2.

Additionally, the base station BS may send a signalling message denoted with 3. which includes an identifier of the user terminal UE to forward the indication of the presence in the cell of the user terminal UE in idle mode to the mobility management entity MME. The sending of this signaling message has a further benefit if applied to a small cell such as a pico cell in that the overhead required for paging can be reduced. The pico cell would be aware of the presence of a user terminal in idle mode and could communicate this information to the Mobility Management Entity MME. The paging message would be transmitted inside the pico cell only, or in a rather small number of cells. The power reduction in small cells can be considered as relevant, as small cells often provide a capacity layer which is mainly needed in the busy hours.

After a predefined time interval, the user terminal UE in idle mode again sends at time t=t2 a signalling message denoted with 4. to indicate its presence in the cell. This signalling may again be similar as with the message denoted with 1.

Due to reception of said signalling message 4., the base station BS stays in the transmission mode with transmission of broadcast channel information.

In the embodiment described here, after sending of the signalling message denoted with 4. to indicate its presence in the cell, the user terminal UE is switched off. As a consequence, the user terminal no longer sends signalling messages to indicate its presence in the cell.

The base station BS again switches to the transmission mode without transmission of broadcast channel information after a predefined period of time Δt during which the base station BS has not received a signalling message which indicates the presence of the user terminal UE in the cell. Said predefined period of time Δt must be longer than the time interval of the signalling messages to indicate the presence in the cell of the user terminal in idle mode.

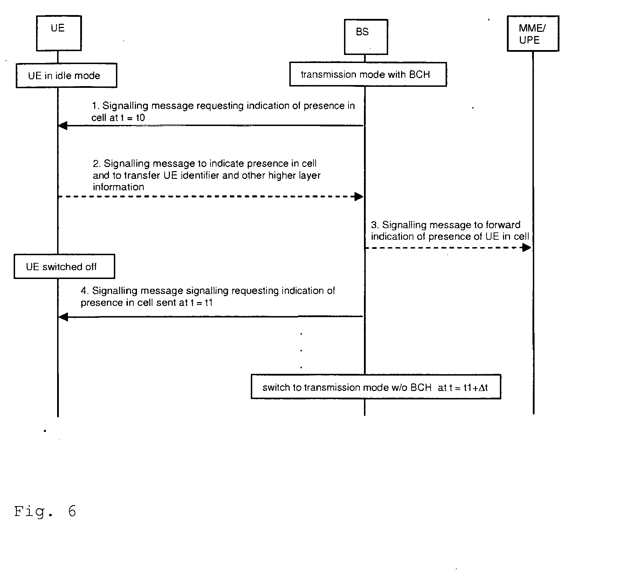

In fig. 6, a protocol procedure according to a further embodiment of the invention for the exchange of messages between a user terminal UE and a base station BS in order to make the user terminal UE in idle mode known to the base station BS is depicted. In this embodiment, the sending of signalling messages to indicate the presence in the cell of the user terminal UE in idle mode is triggered by the base station BS.

In the initial state at the beginning, the base station BS shall be in the transmission mode with transmission of broadcast channel information, and the user terminal UE shall just have entered the coverage of the cell that is served by the base station BS, and shall be in idle mode.

According to the embodiment of the invention, a base station BS in the transmission mode with transmission of broadcast channel information shall repeatedly send signalling messages in order to request from user terminals in idle mode the sending of signalling messages to indicate the presence in the cell. Such signaling messages sent from the base station BS can comprise special paging methods, e.g. similar to the ones known from Multimedia Broadcast Multicast Service (MBMS) under the name counting, where user terminals are requested by a group paging indicator to indicate their presence in the cell.

The time interval of the signalling messages sent from the base station BS shall preferably be in the range of minutes in order to have limited impact on battery life of user terminals in idle mode which must reply to said messages.

Thus, the base station BS in the transmission mode with transmission of broadcast channel information sends a signalling message denoted with 1. to request an indication of the presence in the cell.

After reception of the signaling message sent from the base station BS, the user terminal UE in idle mode sends a signalling message denoted with 2. to indicate its presence in the cell. Said signaling may be as described above under fig. 5 for the signalling message denoted with 2.

After reception of said signalling message denoted with 2., the base station BS may send a signalling message denoted with 3. which includes an identifier of the user terminal UE to forward the indication of the presence in the cell of the user terminal UE in idle mode to the mobility management entity MME as described above under fig. 5.

In this embodiment, after sending of the signalling message denoted with 2. to indicate its presence in the cell, the user terminal UE is switched off. As a consequence, the user terminal no longer sends signalling messages to indicate its presence in the cell.

The base station BS again sends at time t=t1 a signalling message denoted with 4. to request an indication of the presence in the cell.

As the user terminal UE is switched off, it can not reply to the signalling message denoted with 4. sent from the base station BS. Thus, the base station BS again switches to the transmission mode without transmission of broadcast channel information after a predefined period of time Δt during which the base station BS has not received a signalling message which indicates the presence of the user terminal UE in the cell.

In a further embodiment of the invention, signaling messages sent from the base station BS comprise protocols or procedures requiring from user terminals in idle mode to monitor a potential transmission mode switch and to indicate their presence, if they detect a transmission mode without transmission of broadcast channel information, or if they are requested by the base station BS to indicate their presence in a transmission mode with transmission of broadcast channel information.

## Claims

1. A method for scheduling a mode for transmission between a base station (BS) and user terminals (UE), wherein
• a first mode for transmission between a base station (BS) and user terminals (UE), in which no broadcast channel information, but at least primary and secondary synchronization signals (PSS, SSS) are transmitted, is scheduled if the base station (BS) has no knowledge of the presence of at least one connected user terminal or at least one user terminal in idle mode in the coverage of the base station (BS),
• a second mode for transmission between a base station (BS) and user terminals (UE), in which broadcast channel information is transmitted, is scheduled if the base station (BS) has knowledge of the presence of at least one connected user terminal or at least one user terminal in idle mode in the coverage of the base station (BS),
• the at least one user terminal which is in idle mode announces its presence in the coverage of the base station (BS) by means of sending a random access channel preamble to the base station (BS),
• a random access channel configuration for the first mode for transmission between the base station (BS) and the user terminals (UE), in which no broadcast channel information is transmitted, is known in the user terminals (UE) without transmission of broadcast channel information,
• and the random access channel configuration is dependent on a cell identifier that is derived from said primary or secondary synchronization signals (PSS, SSS) received, by the user terminals (UE).

2. A method according to claim 1, wherein in the first mode for transmission between a base station (BS) and user terminals (UE), no cell-specific reference signals are transmitted.

3. A method according to claim 1, wherein the base station (BS) transmits at least one message by which user terminals which are in idle mode are requested to announce their presence in the coverage of the base station (BS).

4. A method according to claim 1 or 2, wherein user terminals which are in idle mode in the coverage of the base station (BS) monitor the mode for transmission between the base station (BS) and the user terminals (UE), and transmit a message to the base station (BS) indicating their presence in the coverage of the base station (BS) if the first mode for transmission between the base station (BS) and the user terminals (UE) is scheduled, in which no broadcast channel information is transmitted.

5. A method according to any of the preceding claims, wherein the first mode for transmission between the base station (BS) and the user terminals (UE), in which no broad-cast channel information is transmitted, is scheduled if the base station (BS) has no knowledge of the presence of at least one connected user terminal or at least one user terminal in idle mode in the coverage of the base station (BS) since a predefined period of time.

6. A method according to claim 3, wherein the first mode for transmission between the base station (BS) and the user terminals (UE), in which no broadcast channel information is transmitted, is scheduled if the base station (BS) does not receive an announcement of the presence of at least one user terminal in idle mode in the coverage of the base station (BS) within a predefined period of time since the at least one message by which user terminals which are in idle mode are requested to announce their presence in the coverage of the base station (BS) has been transmitted.

7. A method according to claim 1, 2, 3 or 4, wherein the base station (BS) transmits information about user terminals in idle mode in the coverage of the base station (BS) that the base station (BS) has received via radio resource control signaling to the mobility management entity, and the mobility management entity triggers the transmission of a paging message only in one of the group of the cell which is served by the base station and a cluster of cells comprising the cell which is served by the base station.

8. A method according to any of the preceding claims, wherein the first and second mode for transmission are modes for transmission on OFDM symbols.

9. A base station (BS) for scheduling a mode for transmission between the base station (BS) and user terminals (UE), wherein the base station (BS) comprises at least one processing means which is adapted to
• schedule a first mode for transmission between a base station (BS) and user terminals (UE), in which no broadcast channel information, but at least primary and secondary synchronization signals (PSS, SSS) are transmitted, if the base station (BS) has no knowledge of the presence of at least one connected user terminal or at least one user terminal in idle mode in the coverage of the base station (BS),
• schedule a second mode for transmission between a base station (BS) and user terminals (UE), in which broadcast channel information is transmitted, if the base station (BS) has knowledge of the presence of at least one connected user terminal or at least one user terminal in idle mode in the coverage of the base station (BS),
• and transmit said primary and secondary synchronization signals from which cell identifiers can be derived that determine random access channel configurations.

10. A user terminal (UE) for scheduling a mode for transmission between a base station (BS) and user terminals (UE), wherein the user terminal (UE) comprises at least one processing means which is adapted to
• monitor modes for transmission between the base station (BS) and the user terminals (UE),
• announce its presence in the coverage of the base station (BS) by means of sending a random access channel preamble to the base station (BS) if the user terminal (UE) is in idle mode in the coverage of the base station (BS) and if a mode for transmission between the base station (BS) and the user terminals (UE) is scheduled, in which no broadcast channel information, but at least primary and secondary synchronization signals (PSS, SSS) are transmitted,
• know a random access channel configuration for the mode for transmission between the base station (BS) and user terminals (UE), in which no broadcast channel information is transmitted, without transmission of broadcast channel information,
• and determine the random access channel configuration from a cell identifier that is derived from the primary or secondary synchronization signals (PSS, SSS) received by the user terminal (UE).

11. A communication network (CN) comprising at least one base station (BS) according to claim 9.

## Patentansprüche

1. Verfahren zur Zeitplanung eines Modus für die Übertragung zwischen einer Basisstation (BS) und Benutzerendgeräten (UE), wobei
• ein erster Modus für die Übertragung zwischen einer Basisstation (BS) und Benutzerendgeräten (UE), in welchem keine Rundfunkkanalinformationen, jedoch zumindest primäre und sekundäre Synchronisationssignale (PSS, SSS) übertragen werden, geplant wird, wenn die Basisstation (BS) keine Kenntnis von der Präsenz mindestens eines verbundenen Benutzerendgeräts oder mindestens eines sich im Leerlaufmodus befindenden Benutzerendgeräts im Abdeckungsbereich der Basisstation (BS) hat,
• ein zweiter Modus für die Übertragung zwischen einer Basisstation (BS) und Benutzerendgeräten (UE), in welchem Rundfunkkanalinformationen übertragen werden, geplant wird, wenn die Basisstation (BS) Kenntnis von der Präsenz mindestens eines verbundenen Benutzerendgeräts oder mindestens eines sich im Leerlaufmodus befindenden Benutzerendgeräts im Abdeckungsbereich der Basisstation (BS) hat,
• das mindestens eine Benutzerendgerät, welches sich im Leerlaufmodus befindet, seine Präsenz im Abdeckungsbereich der Basisstation (BS) durch Senden einer Direktzugriffskanal-Präambel an die Basisstation (BS) meldet,
• eine Direktzugriffskanal-Konfiguration für den ersten Modus für die Übertragung zwischen der Basisstation (BS) und den Benutzerendgeräten (UE), in welchem keine Rundfunkkanalinformationen übertragen werden, ohne die Übertragung von Rundfunkkanalinformationen in den Benutzerendgeräten (UE) bekannt ist,
• und die Direktzugriffskanal-Konfiguration von einer Zellkennung, welche aus den besagten an den Benutzerendgeräten (UE) empfangenen primären oder sekundären Synchronisationssignalen (PSS, SSS) abgeleitet wird, abhängt.

2. Verfahren nach Anspruch 1, wobei in dem ersten Modus für die Übertragung zwischen einer Basisstation (BS) und Benutzerendgeräten (UE) keine zellspezifischen Referenzsignale übertragen werden.

3. Verfahren nach Anspruch 1, wobei die Basisstation (BS) mindestens eine Nachricht überträgt, in welcher Benutzerendgeräte, die sich im Leerlaufmodus befinden, aufgefordert werden, ihre Präsenz im Abdeckungsbereich der Basisstation (BS) zu melden.

4. Verfahren nach Anspruch 1 oder 2, wobei Benutzerendgeräte, die sich im Leerlaufmodus befinden, im Abdeckungsbereich der Basisstation (BS) den Modus für die Übertragung zwischen der Basisstation (BS) und den Benutzerendgeräten (UE) überwachen und eine Nachricht an die Basisstation (BS) übertragen, welche deren Präsenz im Abdeckungsbereich der Basisstation (BS) angibt, wenn der erste Modus für die Übertragung zwischen der Basisstation (BS) und den Benutzerendgeräten (UE) geplant ist, in welchem keine Rundfunkkanalinformationen übertragen werden.

5. Verfahren nach einem beliebigen der vorstehenden Ansprüche, wobei der erste Modus für die Übertragung zwischen der Basisstation (BS) und den Benutzerendgeräten (UE), in welchem keine Rundfunkkanalinformationen übertragen werden, geplant wird, wenn die Basisstation (BS) keine Kenntnis von der Präsenz mindestens eines verbundenen Benutzerendgeräts oder mindestens eines sich im Leerlaufmodus befindenden Benutzerendgeräts im Abdeckungsbereich der Basisstation (BS) seit einer vorbestimmten Zeitspanne hat.

6. Verfahren nach Anspruch 3, wobei der erste Modus für die Übertragung zwischen der Basisstation (BS) und den Benutzerendgeräten (UE), in welchem keine Rundfunkkanalinformationen übertragen werden, geplant wird, wenn die Basisstation (BS) keine Meldung über die Präsenz mindestens eines sich im Leerfaufmodus befindenden Benutzerendgeräts im Abdeckungsbereich der Basisstation (BS) innerhalb einer vordefinierten Zeitspanne seit der Übertragung der mindestens einen Nachricht, in welcher sich im Leerlaufmodus befindende Benutzerendgeräte aufgefordert wurden, ihre Präsenz im Abdeckungsbereich der Basisstation (BS) zu melden, empfängt.

7. Verfahren nach Anspruch 1, 2, 3 oder 4, wobei die Basisstation (BS) Informationen über sich im Leerlaufmodus befindende Benutzerendgeräte im Abdeckungsbereich der Basisstation (BS), welche die Basisstation (BS) über Funkressourcensteuerungssignalisierung empfangen hat, an die Mobilitätsverwaltungsentität überträgt, und wobei die Mobilitätsverwaltungsentität die Übertragung einer Paging-Nachricht nur in einer der Gruppe von Zellen, welche von der Basisstation bedient wird, und einem Cluster von Zellen, welcher die von der Basisstation bediente Zelle einschließt, auslöst.

8. Verfahren nach einem beliebigen der vorstehenden Ansprüche, wobei der erste und der zweite Übertragungsmodus Modi für die Übertragung auf OFDM-Symbolen sind.

9. Basisstation (BS) zur Zeitplanung eines Modus für die Übertragung zwischen der Basisstation (BS) und Benutzerendgeräten (UE), wobei die Basisstation (BS) zumindest ein Verarbeitungsmittel umfasst, welches für das Durchführen der folgenden Schritte ausgelegt ist:
• Planen eines ersten Modus für die Übertragung zwischen einer Basisstation (BS) und Benutzerendgeräten (UE), in welchem keine Rundfunkkanalinformationen, jedoch zumindest primäre und sekundäre Synchronisationssignale (PSS, SSS) übertragen werden, wenn die Basisstation (BS) keine Kenntnis von der Präsenz mindestens eines verbundenen Benutzerendgeräts oder mindestens eines sich im Leerlaufmodus befindenden Benutzerendgeräts im Abdeckungsbereich der Basisstation (BS) hat,
• Planen eines zweiten Modus für die Übertragung zwischen einer Basisstation (BS) und Benutzerendgeräten (UE), in welchem Rundfunkkanalinformationen übertragen werden, wenn die Basisstation (BS) Kenntnis von der Präsenz mindestens eines verbundenen Benutzerendgeräts oder mindestens eines sich im Leerlaufmodus befindenden Benutzerendgeräts im Abdeckungsbereich der Basisstation (BS) hat,
• und Übertragen der besagten primären und sekundären Synchronisationssignale, aus denen Zellkennungen abgeleitet werden können, welche Direktzugriffskanal-Konfigurationen bestimmen.

10. Benutzerendgerät (UE) zur Zeitplanung eines Modus für die Übertragung zwischen einer Basisstation (BS) und Benutzerendgeräten (UE), wobei das Benutzerendgerät (UE) zumindest ein Verarbeitungsmittel umfasst, welches ausgelegt ist für
• das Überwachen der Modi für die Übertragung zwischen der Basisstation (BS) und den Benutzerendgeräten (UE),
• das Melden seiner Präsenz im Abdeckungsbereich der Basisstation (BS) durch Senden einer Direktzugriffskanal-Präambel an die Basisstation (BS), wenn sich das Benutzerendgerät (UE) im Leerlaufmodus im Abdeckungsbereich der Basisstation (BS) befindet, und wenn ein Modus für die Übertragung zwischen der Basisstation (BS) und den Benutzerendgeräten (UE), in welchem keine Rundfunkkanalinformationen, jedoch mindestens primäre und sekundäre Synchronisationssignale (PSS, SSS) übertragen werden, geplant wird,
• das Kennen einer Direktzugriffskanal-Konfiguration für den Modus für die Übertragung zwischen der Basisstation (BS) und den Benutzerendgeräten (UE), in welchem keine Rundfunkkanalinformationen übertragen werden, ohne die Übertragung von Rundfunkkanalinformationen,
• und das Bestimmen der Direktzugriffskanal-Konfiguration aus einer Zellkennung, welche aus den am Benutzerendgerät (UE) empfangenen primären oder sekundären Synchronisationssignalen (PSS, SSS) abgeleitet wird.

11. Kommunikationsnetzwerk (CN) mit mindestens einer Basisstation (BS) gemäß Anspruch 9.

## Revendications

1. Procédé de planification d'un mode de transmission entre une station de base (BS) et des terminaux d'utilisateurs (UE), dans lequel
• un premier mode de transmission entre une station de base (BS) et des terminaux d'utilisateurs (UE), dans lequel aucune information de canal de diffusion n'est transmise, mais au moins des signaux de synchronisation primaires et secondaires (PSS, SSS) sont transmis, est planifié si la station de base (BS) n'a pas connaissance de la présence d'au moins un terminal d'utilisateur connecté ou d'au moins un terminal d'utilisateur en mode de veille dans la couverture de la station de base (BS),
• un deuxième mode de transmission entre une station de base (BS) et des terminaux d'utilisateurs (UE), dans lequel des informations de canal de diffusion sont transmises, est planifié si la station de base (BS) a connaissance de la présence d'au moins un terminal d'utilisateur connecté ou d'au moins un terminal d'utilisateur en mode de veille dans la couverture de la station de base (BS),
• l'au moins un terminal d'utilisateur qui est en mode de veille annonce sa présence dans la couverture de la station de base (BS) en envoyant un préambule de canal d'accès aléatoire à la station de base (BS),
• une configuration de canal d'accès aléatoire pour le premier mode de transmission entre la station de base (BS) et les terminaux d'utilisateurs (UE), dans lequel aucune information de canal de diffusion n'est transmise, est connue dans les terminaux d'utilisateurs (UE) sans transmission d'informations de canal de diffusion,
• et la configuration de canal d'accès aléatoire dépend d'un identifiant de cellule qui est dérivé desdits signaux de synchronisation primaires ou secondaires (PSS, SSS) reçus par les terminaux d'utilisateurs (UE).

2. Procédé selon la revendication 1, dans lequel dans le premier mode de transmission entre une station de base (BS) et des terminaux d'utilisateurs (UE), aucun signal de référence spécifique à cellule n'est transmis.

3. Procédé selon la revendication 1, dans lequel la station de base (BS) transmet au moins un message par lequel on demande à des terminaux d'utilisateurs, qui sont en mode de veille, d'annoncer leur présence dans la couverture de la station de base (BS).

4. Procédé selon la revendication 1 ou 2, dans lequel des terminaux d'utilisateurs, qui sont en mode de veille dans la couverture de la station de base (BS), surveillent le mode de transmission entre la station de base (BS) et les terminaux d'utilisateurs (UE), et transmettent un message à la station de base (BS) indiquant leur présence dans la couverture de la station de base (BS) si le premier mode de transmission entre la station de base (BS) et les terminaux d'utilisateurs (UE), dans lequel aucune information de canal de diffusion n'est transmise, est planifié.

5. Procédé selon l'une quelconque des revendications précédentes, dans lequel le premier mode de transmission entre la station de base (BS) et les terminaux d'utilisateurs (UE), dans lequel aucune information de canal de diffusion n'est transmise, est planifié si la station de base (BS) n'a pas connaissance de la présence d'au moins un terminal d'utilisateur connecté ou d'au moins un terminal d'utilisateur en mode de veille dans la couverture de la station de base (BS) depuis une période prédéfinie.

6. Procédé selon la revendication 3, dans lequel le premier mode de transmission entre la station de base (BS) et les terminaux d'utilisateurs (UE), dans lequel aucune information de canal de diffusion n'est transmise, est planifié si la station de base (BS) ne reçoit aucune annonce de la présence d'au moins un terminal d'utilisateur en mode de veille dans la couverture de la station de base (BS) pendant une période prédéfinie depuis que l'au moins un message, par lequel on demande à des terminaux d'utilisateurs qui sont en mode de veille d'annoncer leur présence dans la couverture de la station de base (BS), a été transmis.

7. Procédé selon la revendication 1, 2, 3 ou 4, dans lequel la station de base (BS) transmet des informations sur des terminaux d'utilisateurs en mode de veille dans la couverture de la station de base (BS) que la station de base (BS) a reçues par l'intermédiaire d'une signalisation de commande de ressources radio à l'entité de gestion de la mobilité, et l'entité de gestion de la mobilité déclenche la transmission d'un message de radiomessagerie uniquement dans le groupe de la cellule qui est desservie par la station de base ou dans un groupement de cellules comprenant la cellule qui est desservie par la station de base.

8. Procédé selon l'une quelconque des revendications précédentes, dans lequel le premier et le deuxième modes de transmission sont des modes de transmission sur des symboles OFDM.

9. Station de base (BS) de planification d'un mode de transmission entre la station de base (BS) et des terminaux d'utilisateurs (UE), la station de base (BS) comprenant au moins un moyen de traitement qui est adapté pour
• planifier un premier mode de transmission entre une station de base (BS) et des terminaux d'utilisateurs (UE), dans lequel aucune information de canal de diffusion n'est transmise, mais au moins des signaux de synchronisation primaires et secondaires (PSS, SSS) sont transmis, si la station de base (BS) n'a pas connaissance de la présence d'au moins un terminal d'utilisateur connecté ou d'au moins un terminal d'utilisateur en mode de veille dans la couverture de la station de base (BS),
• planifier un deuxième mode de transmission entre une station de base (BS) et des terminaux d'utilisateurs (UE), dans lequel des informations de canal de diffusion sont transmises, si la station de base (BS) a connaissance de la présence d'au moins un terminal d'utilisateur connecté ou d'au moins un terminal d'utilisateur en mode de veille dans la couverture de la station de base (BS),
• et transmettre lesdits signaux de synchronisation primaires et secondaires à partir desquels des identifiants de cellules qui déterminent des configurations de canal d'accès aléatoire peuvent être dérivés.

10. Terminal d'utilisateur (UE) de planification d'un mode de transmission entre une station de base (BS) et des terminaux d'utilisateurs (UE), le terminal d'utilisateur (UE) comprenant au moins un moyen de traitement qui est adapté pour
• surveiller des modes de transmission entre la station de base (BS) et les terminaux d'utilisateur (UE),
• annoncer sa présence dans la couverture de la station de base (BS) au moyen de l'envoi d'un préambule de canal d'accès aléatoire à la station de base (BS) si le terminal d'utilisateur (UE) est en mode de veille dans la couverture de la station de base (BS) et si un mode de transmission entre la station de base (BS) et les terminaux d'utilisateurs (UE), dans lequel aucune information de canal de diffusion n'est transmise, mais au moins des signaux de synchronisation primaires et secondaires (PSS, SSS) sont transmis, est planifié,
• connaître une configuration de canal d'accès aléatoire pour le mode de transmission entre la station de base (BS) et des terminaux d'utilisateurs (UE), dans lequel aucune information de canal de diffusion n'est transmise, sans transmission d'informations de canal de diffusion,
• et déterminer la configuration de canal d'accès aléatoire à partir d'un identifiant de cellule qui est dérivé des signaux de synchronisation primaires ou secondaires (PSS, SSS) reçus par le terminal d'utilisateur (UE).

11. Réseau de communication (CN), comprenant au moins une station de base (BS) selon la revendication 9.
